# EUROPEAN PATENT APPLICATION

(11) **EP 1 494 208 A1**
(43) Date of publication of application: **05.01.2005**
(21) Application number: 03014845.6
(22) Date of filing: 30.06.2003
(51) Int. Cl.: G10L 15/22, G10L 11/02

(54) **Method for controlling a speech dialog system and speech dialog system**

(71) Applicant: Harman Becker Automotive Systems GmbH, 76307 Karlsbad (DE)
(72) Inventor: Hennecke, Marcus, Dr., 89075 Ulm (DE)
(74) Representative: Grünecker, Kinkeldey, Stockmair & Schwanhäusser Anwaltssozietät

(57) **Abstract**

The invention is directed to a method for controlling a speech dialog system, wherein an acoustic output signal is provided in response to an acoustic input signal, comprising the steps of receiving a further acoustic input signal, processing the further acoustic input signal by a voice activity detector, processing the further acoustic input signal or an output signal corresponding to the further acoustic input signal provided by the voice activity detector by a speech recognition unit to detect speech, if voice activity was detected by the voice activity detector, modifying the acoustic output signal if speech was detected by the speech recognition unit during the output of the output signal.

## Description

The invention is directed to a method for controlling a speech dialog system and to a speech dialog system, in particular, that are able to deal with barge-in.

Speech dialog systems are used in more and more applications in different fields. A speech dialog system is configured to recognize a speech signal and to respond in some way to this input. A speech dialog system can be employed to enable a user to get information, order something or control devices.

For example, a speech dialog system can be integrated in a ticket machine. A user can then enter a dialog with the machine by acoustically ordering a ticket from one location to another. After having activated the speech dialog system (e.g., using a kind of push-to-talk key), for example, the user may say: "A ticket from Munich to Berlin, please". In this case, the speech dialog system, first of all, tries to recognize the spoken phrase. This can be done in different ways. Usually, the system searches for keywords that have been stored in the memory. The speech dialog system can be equipped with a single word speech recognizer and/or a compound word speech recognizer.

A single word speech recognizer requires that different words are separated by a sufficiently long pauses such that the system can determine the beginning and the end of the word. A compound word recognizer tries to determine the beginning and end of words even if no explicit pause between the words is present as is the case of a standard speech behavior. In both alternatives, the speech input is compared to previously stored speech samples. These samples can be whole words, for example, or smaller units such as phonemes.

Having recognized the speech input or at least some of the keywords, the system enters into a dialog and/or performs a corresponding action. In the previously described example of a ticket machine, the system might have recognized the keywords "ticket", "Munich" and "Berlin". In this case, the speech dialog system can output the question: "First class or second class ticket?" and await a further input by the user. Thus, the system determines all relevant parameters to comply with the user's wish and, in the end, print out a corresponding ticket.

As another example, speech dialog systems can also be used in the context of providing information. Similar to the above ticket machine, a timetable information machine can output timetable information on speech request by a user. Also, in such a case, it might be necessary to enter a dialog with the user in order to receive all necessary parameters such as starting point, destination and date.

In addition to the above-mentioned examples, more and more often, speech dialog systems are also used in connection with the control of devices. In particular, cars can be equipped with a speech dialog system enabling the driver to control devices such as the car radio, the mobile phone or the navigation system. Also in this case, the speech dialog system may enter into a dialog with the user in order to request necessary information enabling the user controlling a device via speech commands. For example, after having recognized that the user wants to make a telephone call, the speech dialog system may ask the user for the telephone number or a name of a person to be called that has been stored in a telephone book stored in the system.

More advanced systems allow the possibility of so-called barge-in. This means a user may interrupt a speech output (e.g., a prompt) of the speech dialog system by beginning saying something. In other words, during the output of a phrase, such a speech dialog system is enabled to detect speech. In the case, speech is detected during speech output, the speech dialog system stops the output. In this way, the user can accelerate a dialog with the system by skipping parts of the dialog that are of less importance to him.

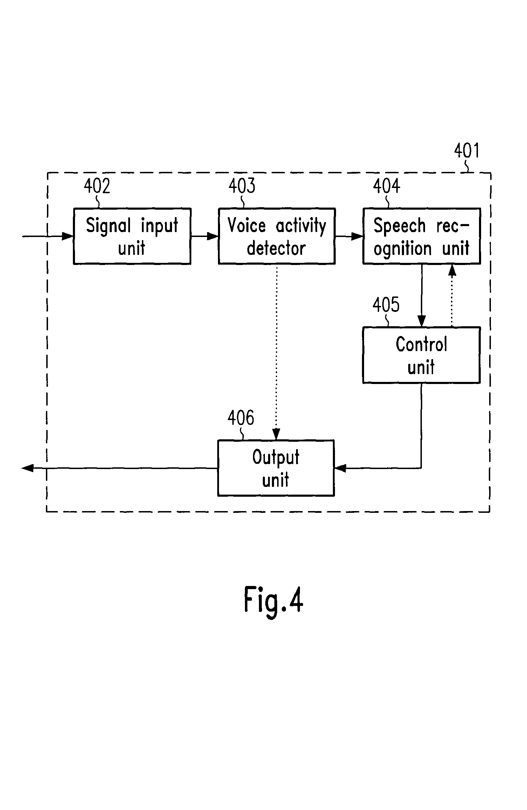

The structure of such a prior art speech dialog system is shown in Fig. 4. The speech dialog system 401 shown in this figure comprises an input unit 402 to receive acoustical signals. The input unit 402 is connected to a microphone. Received signals are transmitted from the input unit 402 to a voice activity detector 403. Voice activity detector 403 is responsible for detecting whether the received signals comprise voice activity. If voice activity is detected, the signal is transmitted to the speech recognition unit 404. At the same time, i.e. as soon as a voice activity is detected, a corresponding signal is sent to the output unit 406 comprising a play back unit for playing back an output speech signal. Due to this control signal fed to the output unit 406, play back unit is stopped such that the output signal is interrupted. Except for this particular case, both speech recognition units 404 and output unit 406 are controlled by control unit 405.

Thus, this prior art system allows the possibility to interrupt the speech output of the speech dialog system by starting to speak. If a speech signal is detected by the speech detector, the speech output is interrupted. However, in these prior art speech dialog systems, the speech detector is set to a very high speech sensitivity. This means, the speech detector might detect a speech signal although in reality no speech signal is present. The speech sensitivity of the detector is set to a relatively high sensitivity in order to avoid that an actual speech signal is not detected resulting in a lack of reaction of the speech dialog system.

However, due to this high speech sensitivity, the prior art speech dialog systems have the drawback that - as already said before - a speech signal might be detected even if no speech signal is actually present. This also means that correspondingly, in such a case, a control signal would be sent from the speech detector to the output unit, thus, interrupting the speech output. In other words, speech output would be interrupted even if only a background noise resembling a speech signal is detected by the speech detector.

In view of this drawback, it is the problem underlying the invention to provide a method for controlling a speech dialog system that is more robust regarding barge-in, in particular, that reliably detects barge-in.

This problem is solved by method according to claim 1 and a speech dialog system according to claim 12.

Accordingly, a method for controlling a speech dialog system is provided, wherein an acoustic output signal is provided in response to an acoustic input signal, comprising the steps of:
receiving a further acoustic input signal,
processing the further acoustic input signal by a voice activity detector to detect voice activity,
processing the further acoustic input signal or an output signal corresponding to the further acoustic input signal provided by the voice activity detector by a speech recognition unit to detect speech, if voice activity was detected by the voice activity detector,
modifying the output signal if speech was detected by the speech recognition unit during the output of the output signal.

Thus, an input signal is processed in two ways according to the invention, namely, by voice activity detection and, then, by speech recognition if voice activity was detected in the voice activity detection step. Voice activity detection is determining whether an input signal comprises voice activity in principle. Usually, speech recognition is extracting actual terms from a signal such as words, numbers or phrases. However, in the present case, it also serves for speech detection.

According to the inventive method, if not only voice activity but also speech is detected during the output of an acoustic output signal, the output signal is modified. Thus, in this method, the voice activity detection can be set very sensitively such that no actual speech signal is missed. However, although a voice activity might be detected, this does not result necessarily in modifying the output signal. Only if also speech is detected by the speech recognition unit, the output signal is modified. In this way, barge-in can be controlled in a very robust way.

On the other hand, since a voice activity detection step is performed on an input signal first, the usually more complicated and costly step of speech recognition is performed only after this kind of preprocessing. Thus, in contrast to prior art methods, the inventive method for controlling a speech dialog system is highly reliable and makes optimum use of the resources present such as voice activity detection and speech recognition.

Preferably, the output signal can be a speech output signal.

According to a preferred embodiment, the modifying step can comprise reducing the volume of the output signal. Thus if barge-in is detected by the above steps of the method, the volume is reduced. For example, if a user is not interested in listening to the output signal, he or she may start talking to somebody else. In this case, reducing the volume results in a better understandability of the speaker.

Preferably, the modifying step can comprise interrupting the outputting of the output signal. Hence, if a user starts talking during an output signal is output, this output signal is interrupted. In this way, a user can accelerate or interrupt or stop completely a dialog with the speech dialog system.

Advantageously, if speech is detected during the output of a response signal, first of all, the volume of the output signal can be reduced. This means that outputting of the output signal continues but with reduced volume. If, however, a speech signal is still detected after a predetermined time interval, the outputting of the output signal can be interrupted. In other words, an actual interruption only occurs if repeatedly speech signals are detected but not in the case of a speech signal being detected only for a short time. This is useful if a user wants to say something very short but does not intend to interrupt the dialog with the system.

According to a preferred embodiment of the previously described methods, in the processing step by the speech recognition unit, speech can detected using at least one criterion based on a Hidden Markov Model, a pause model, an artificial neural network, confidence features, the number of interrupted words, and/or a code book.

In particular, in a Hidden Markov Model (HMM), a probabilistic pattern matching technique is used. The words or phonemes are used as smallest entities (modeling units). Speech is modeled by a hidden (from an observer) stochastic process which is observed through another stochastic process. The model is based on the assumption that the hidden process is a discrete Markov process. This means, a current event (for example, current phoneme or current word) depends only on the j most recent events (Markov property) where j is a natural number. Thus, subsequent events can be characterized by corresponding path probabilities signifying the probability that a specific event occurs given the j most recent events. For adjusting the model parameters, phonetic or syntactic knowledge sources can be taken into account. Examples for corresponding algorithms for a HMM are the Viterbi algorithm, forward-backward algorithm, Baum-Welch-algorithm.

Pause models are used to model pauses after an utterance. A pause model can also be based on a Hidden Markov Model.

The processing by the speech recognition unit can be performed using an isolated word recognition and/or compound word speech recognition unit. The speech recognition unit can be speaker-dependent or speaker-independent. In the speaker dependent case,. a user has to train the system, i.e. speech samples are to be provided. This is not necessary in the case of a speaker independent speech recognition.

According to a preferred embodiment, path probabilities and/or path numbers of the Hidden Markov Model and/or the pause model can be used for the predetermined criterion. This provides an advantageous possibility for deciding whether a speech signal is actually present using speech recognition, thus, resulting in an improved control of a speech dialog system.

According to an advantageous embodiment, at least two criteria can be used, and the method can comprise the step of feeding the results of the at least two criteria to a classification unit. In this way, different criteria can be used in parallel. In the classification unit, the results of the used criteria can be weighted so as to obtain a result with increased reliability.

Preferably, the processing step by the speech recognition unit can comprise recognizing speech by the speech recognition unit. Thus, if barge-in is detected, the input signal can be directly used for speech recognition, the result of which can be further processed. In this way, a speech dialog can be accelerated.

Advantageously, the receiving step can comprise processing the further acoustic input signal by an acoustic echo canceller, a noise reduction means, and/or a feedback suppression means. This yields an enhanced input signal quality which improves the further processing of the signal.

Preferably, the receiving step of the previously described methods can comprise receiving a plurality of further acoustic input signals emanating from a plurality of microphones. In this way, speech signals can be recorded in a very precise way with a good spatial resolution.

Preferably, the receiving step can comprise combining the plurality of further acoustic input signals, preferably using a beamformer. By combining the input signals, the quality of the signal can be enhanced. In particular, an improved signal to noise ratio and an excellent directivity can be obtained. In view of this, speech signals stemming from a specific direction can be preferred; signals from other directions can be suppressed. If the directivity is chosen appropriately, for example, speech signals emanating from loudspeakers may receive a suppression due to a beamformer.

The invention further provides a computer program product directly loadable into an internal memory of a digital computer comprising software code portions for performing the steps of one of the previously described methods.

Furthermore, it is also provided a computer program product stored on a medium readable by a computer system, comprising computer readable program means for causing a computer to perform the steps of one of the previously described methods.

In addition, the invention provides a speech dialog system, comprising a signal input unit, a voice activity detector, a speech recognition unit, and a signal output unit,
wherein the speech dialog system is configured such that if the voice activity detector detects voice activity for an input signal and the speech recognition unit detects speech for the input signal or for an output signal corresponding to the input signal provided by the voice activity detector during an output of the signal output unit, the output signal of the signal output unit is modified

Such a speech dialog system enables a speech dialog between a user and the system, wherein this system allows a barge-in which is detected in a robust and non-costly way. An input signal is processed by a voice activity detector; further, the input signal or an output signal corresponding to the input signal provided by the voice activity detector is processed by a speech recognition unit. Only if both units obtain a corresponding result, the output signal is modified, thus, yielding a highly reliable result.

Preferably, the output signal can comprise a speech signal. Thus, if the speech dialog system outputs a speech signal (for example some information), a user may wish that this output speech signal be modified, for example, because the output speech signal is of less importance or disturbing.

According to a preferred embodiment, the speech dialog system can be configured such that the modification of the output signal is a reduction of the volume of the output signal. If the volume is reduced, a user will be less disturbed or distracted by the output signal.

Preferably, the speech dialog system can be configured such that the modification of the output signal is an interruption of the output signal. In this case, a barge-in enables a user to accelerate or stop completely a speech dialog with the system.

Advantageously, the previously described speech dialog systems can further comprise a control unit, wherein
the voice activity detector has an output for providing a detector output signal if speech activity was detected,
the speech recognition unit has an input for receiving the detector output signal and an output for providing a recognizer output signal if speech was detected,
the control unit has an input for receiving the recognizer output signal and an output for providing a control signal depending on the recognizer output signal, and
the signal output unit has an input for receiving the control signal and an output for providing an output signal depending on the control signal.

Due to this highly advantageous arrangement, an input signal is only transmitted to the speech recognition unit if the voice activity detector has detected a speech signal. Thus, a more complicated speech recognition is only performed if a preceding pre-analyzing (by the voice activity detector) has yielded a positive result. Depending on the recognizer output signal, a control signal and, therefore, an output signal is provided, in this way, resulting in a speech dialog.

Preferably, the control signal can initiate an output of an output signal.

According to a preferred embodiment, the speech recognition can be configured to determine a modification control signal if speech is detected by the speech recognition unit and can further comprise an output for providing the modification signal, and the signal output unit can be connected to the speech recognition unit and can comprise an input for receiving the modification signal.

In this way, the speech recognition unit is responsible for deciding whether and how an output signal is to be modified which results in an improved quality of the barge-in detection and handling.

Preferably, the modification control signal can be configured to interrupt the output of an output signal.

According to an advantageous embodiment, the signal input unit can comprise a plurality of microphones and a beamformer and can comprise an output for providing a beamformed input signal to the signal detection unit.

In order to improve the signal quality, the signal input unit can further comprise echo cancellation means and/or noise reduction means and/or feedback suppression means.

According to a preferred embodiment, the signal output unit can further comprise a memory for storing at least one predetermined output signal and/or a signal synthesizing means, preferably a speech synthesizing means.

In this way, output signals can be adapted precisely to the recognized speech signals in order to enable the speech dialog system to obtain all relevant parameters and information for a further processing.

Furthermore, a vehicle is provided comprising one of the previously described speech dialog systems.

Further advantages and features of the invention will be described in the following with respect to the examples and the figures.
Fig. 1 illustrates the structure of a speech dialog system with improved barge-in handling;
Fig. 2 is a flow diagram of a speech dialog method;
Fig. 3 is a flow diagram illustrating the detection of a speech signal during output in a speech dialog; and
Fig. 4 illustrates the structure of a prior art speech dialog system.

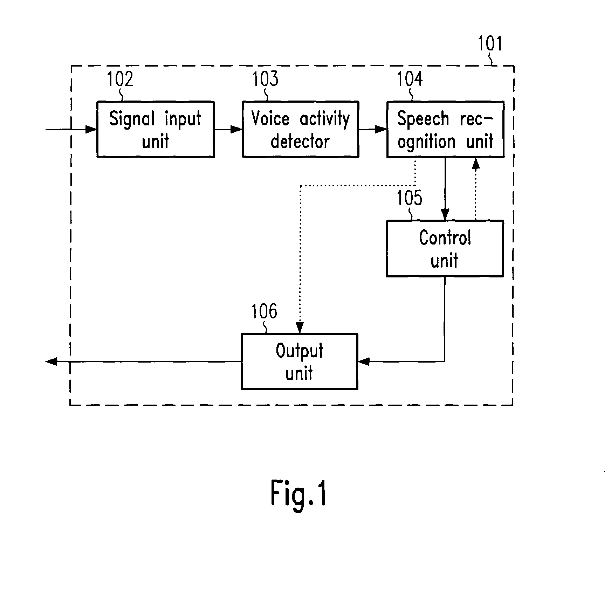

An example of a structure of a speech dialog system in accordance with the invention is shown in Fig. 1. The speech dialog system 101 comprises an input unit 102. Input unit 102 is responsible for receiving input signals and transmitting these signals to further processing. The input unit comprises at least one microphone. Usually, a further processing of the signals is done digitally. In view of this, the input unit can comprise an analogue to digital converter.

Preferably, the signal input unit 102 comprises an array of microphone. Such a microphone array yields a plurality of signals emanating from the different microphones that can be processed by a beamformer which is part of the signal input unit. A beamformer processes signals emanating from a microphone array to obtain a combined signal. In its simplest form (delay-and-sum beamformer), beamforming comprising delay compensation and summing of the signals. In addition, the different signals can be weighted before being summed. In particularly, beamforming allows to provide a specific directivity pattern for a microphone array. Furthermore, due to the processing by a beamformer, the signal-to-noise ratio can be improved.

Additionally, the signal input unit can comprise further signal processing means to enhance the quality of the signal. For example, the input unit may comprise low pass and high pass filters in order to remove frequency components of the signal that are outside the audible range. Alternatively or additionally, the input unit may comprise an acoustic echo canceller (AEC) this allows a suppression of reverberation.

Furthermore, the input unit may also comprise noise reduction means such as a Wiener filter, preferably, an adaptive Wiener filter. The signal input unit can also comprise a feedback suppression means so as to avoid disturbing effects due to signal feedback.

In the case of a microphone array, the previously mentioned signal pre-processing means can be provided for each microphone channel separately; in other words, a signal pre-processing such as echo cancellation is performed on each microphone signal independently before the plurality of signals is beamformed.

The signal input unit 102 is followed by a voice activity detector 103. Such a voice activity detector can be configured different ways. For example, the detector may analyze an incoming signal and determine if the signal contains significant energy (above a predetermined threshold) and, thus, is likely to be speech rather than a background noise. It is also possible to distinguish speech from noise by a spectral comparison of a signal with a stored noise estimate. Such a noise estimate can be updated during speech pause periods in order to adapt the detector and to improve its performance.

The results of the voice activity detector can be erroneous. On the one hand, a voice activity detector can detect voice activity although no speech signal is present. On the other hand, it is also possible that a voice activity detector does not detect a voice activity although a speech signal is actually present. The second type of error is more problematic as in this case, the signal will not be further processed at all. Therefore, voice activity detectors are usually configured so as to produce errors of the second type as seldom as possible. In other words, the voice activity threshold is set very low.

As soon as voice activity is detected, the signal is transmitted from the voice activity detector 103 to the speech recognition unit 104. In the speech dialog system according to the invention, the speech recognition unit performs two functions. On the one hand, the speech recognition unit is responsible for detecting speech, i.e., determining whether a signal actually comprises a speech component. As already said above, signals may be transmitted from the voice activity detector to the speech recognition unit although they actually do not contain speech components. On the other hand, the speech recognition unit is also responsible for indeed recognizing the speech signals. In other words, the speech recognition unit is responsible for determining words, numbers or phrases that have been spoken.

In order to perform the speech detection function, the speech recognition unit is provided with specific speech models and pause models. If the voice activity detector has detected voice activity and, thus, the signal has been transmitted to the speech recognition unit although, in fact, no speech is present, the speech recognition unit would compare its pause models and its speech models with the signal. Since no speech components are present, the pause models will match the signal best. On the other hand, if a speech signal is present, a better matching of the models and the signal is obtained for the speech models; in this way, the speech recognition unit detects speech.

In order to actually recognize speech, the speech recognition unit can be configured as isolated or compound word recognizer. Furthermore, it can be speaker dependent or speaker independent.

Usually, speech recognition algorithms use statistical and structural pattern recognition techniques and/or knowledge based (phonetic and linguistic) principles. Regarding the statistical approach, Hidden Markov Models (HMM) and artificial neural networks (ANN) and combinations thereof are mainly used.

Such speech recognition algorithms allow different possibilities to detect speech. For example, the path probabilities of the pause and/or speech models or the number of the pause and/or speech path can be compared. It is also possible to consider confidence features, or compare the number of interrupted words with a threshold. Furthermore, an evaluation of the code book can be used. In addition, these different criteria can also be combined, for example, by feeding the results to a classification unit evaluating these results and deciding whether speech is detected or not. It is also possible to wait for a specific time (for example, 0.5 s) to determine a tendency that allows to decide whether speech is detected or not.

If speech is detected during an output, the speech recognition unit 104 sends a signal to the output unit 106 as indicated by the dashed arrow. The output unit 106 provides output signals, in particular, speech output signals. Templates of such speech output signals can be stored in the playing unit. However, it is also possible that the playing unit comprises a speech synthesizing unit so as to synthesize desired output signals.

The output signals thus provided are output by a loudspeaker.

However, if during an output of a signal divided by the output unit 106 a signal is received directly from the speech recognition unit 104 signifying that speech has been detected, the output signal is modified. Such a modification can be a reduction of the volume of the output signal, however, it is also possible to interrupt the output completely. The speech recognition unit can provide corresponding control signals to the playing unit initiating corresponding action.

As can be seen in Fig. 1, speech recognition unit 104 is also connected to control unit 105. The control unit has different functions. On the one hand, if the speech dialog system is started, it sends a corresponding starting signal to the speech recognition unit for activation. Then, the speech recognition unit 104 send a signal to voice activity detector 103, activating this detector and indicating that voice activity detection is to be performed on incoming signals.

When starting the speech dialog system, control unit 105 can also send a signal to the output unit initiating a starting speech output such as "Welcome to the automatic information system".

As already stated above, if the voice activity detector yields a positive result, a corresponding signal is transmitted to the speech recognition unit. If again the speech recognition unit recognizes speech, this recognized speech can be transmitted to the control unit that has to decide on how to continue based on this recognized speech signal. For example, a corresponding control signal can be sent to output unit 106 initiating a speech output.

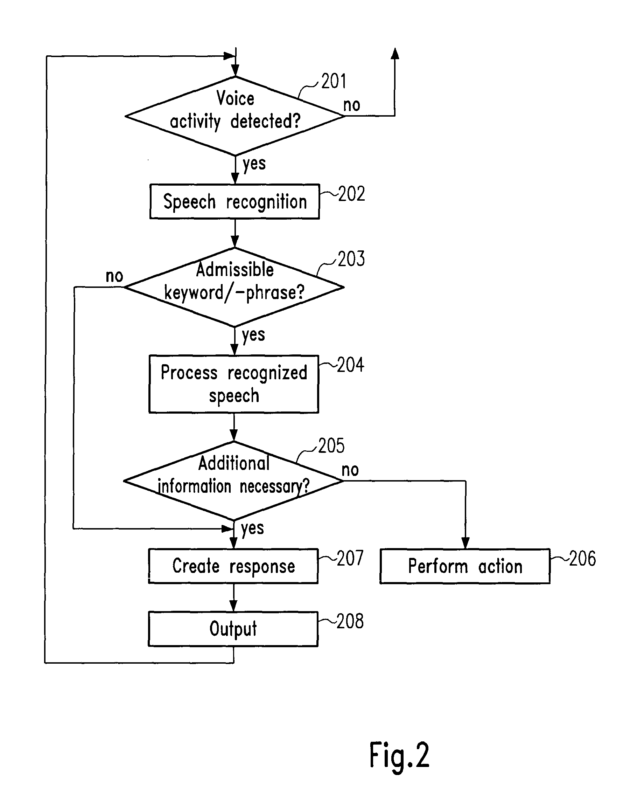

In Fig. 2, a flow chart illustrates a speech dialog method, in particular, corresponding to the speech dialog system of Fig. 1. First of all, an input signal is received. In step 201, it has to be decided (by a voice activity detector) whether the input signal comprises any voice activity. If no, the system returns and awaits further input signals.

However, if voice activity has been detected, the input signal is fed to a speech recognizer; speech recognition is performed (step 202). In this step, the system tries to identify the utterances.

In the next step 203, it is determined whether a recognized speech corresponds to an admissible keyword or key phrase. In other words, the system has to decide not only whether it understands an utterance but also whether such a word or phrase makes any sense at this point. For example, if the speech dialog system using the described method is part of a system controlling board electronics in a vehicle such as car radio, air conditioning and mobile phone, when using this system, a user usually has to navigate through different menus. As an example, after having started the system, the user may choose between the three possibilities "car radio", "air condition" or "mobile phone". In other words, at this point when starting the system, only these three terms might be admissible commands.

If the system has detected an admissible keyword, it proceeds to the next step 204
wherein the recognized speech is processed. In this step, in particular, the system has to decide what action to perform in response to the input.

In step 205, it is to be decided whether additional information is required before following the command, i.e., performing an action. Returning to the above example, when recognizing the term "car radio", the system can simply switch on the car radio (if it is not switched on already) since no other parameters are necessary. This is done in step 206 in which an action is performed depending on the recognized command.

However, if the system has recognized the term "mobile phone", it has to know the number to dial. Thus, the method proceeds to step 207 in which a corresponding response is created. In the mentioned example, this could be the phrase, "Which number would you like to dial?". Such a phrase can be created by simply playing back a previously stored phrase and/or by synthesizing it.

This is followed by step 208, according to which the response is actually output. After the output, the method returns to the beginning.

In step 203, however, it can also happen that no admissible keyword is detected. In this case, the method proceeds directly to step 207 in order to create a corresponding response. For example, if a user has input the term "navigation system" but no navigation system is present, and thus, this term is no admissible keyword, the system may respond in different ways. For example, it may be possible that although the term is not admissible, the system has recognized the term and creates a response of the type "No navigation system is present". Alternatively, if it is only detected that the utterance does not correspond to an admissible keyword, a possible response could be "Please repeat your command". Alternatively or additional, the system can also list the admissible keywords to the user.

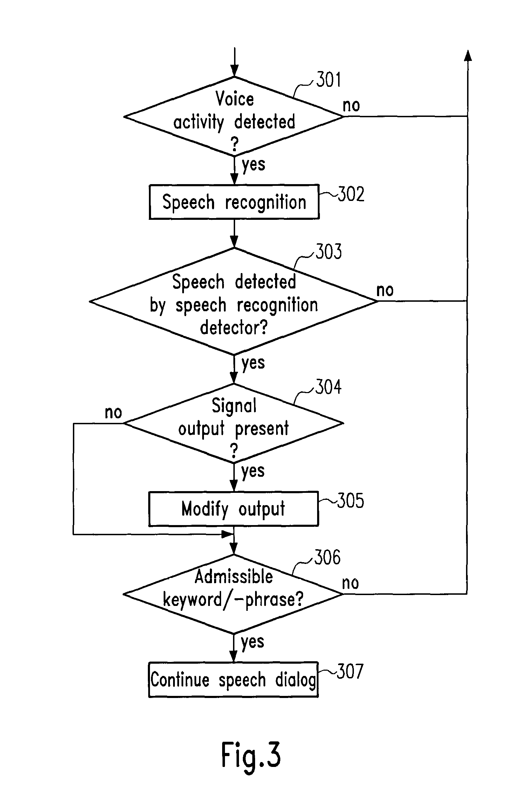

An example illustrating the functioning of a method for controlling a speech dialog system is shown by the flow diagram of Fig. 3. As the method is intended to deal with barge-in during output, the steps shown in Fig. 3 are performed in parallel to the output step 208 of Fig. 2.

First of all, in step 301, it is determined whether an input signal comprises any voice activity. If no, the system returns and continues to evaluate input signals.

On the other hand, if voice activity has been detected, the signal is processed in step 302 by a speech recognition unit. The speech recognition unit determines in step 303 whether the signal actually comprises a speech signal. If the speech recognition unit does not detect speech, this means that the voice activity detector has detected activity erroneously, for example, due to a very dominant background noise. In this case, the system again returns.

If yes, it is determined in step 304 whether at present, a signal output of a system is present. If no, the method continues as already discussed before with the further steps of the speech dialog method, in particular, with deciding whether an admissible keyword has been entered. On the other hand, on step 305, the output is modified. This can be done in different ways. For example, if this is the first time a speech signal has been detected during this output, the volume of the output can simply be reduced. On the other hand, if a speech signal has been detected already for a predetermined time interval during this output, the output can be interrupted completely. Of course it is also possible to interrupt the output immediately as soon as a speech signal has been detected in step 303.

After having modified the output, the method continues with determining whether the recognized speech signal corresponds to an admissible keyword or key phrase in step 306. If no, the method can simply return to the beginning. Alternatively, it is also possible to output a response such as "Please repeat your input".

If an admissible keyword has been detected in step 306, the method continues with the speech dialog (step 307), for example, with step 204 in Fig. 2.

## Claims

1. Method for controlling a speech dialog system, wherein an acoustic output signal is provided in response to an acoustic input signal, comprising the steps of:
receiving a further acoustic input signal,
processing the further acoustic input signal by a voice activity detector to detect voice activity,
processing the further acoustic input signal or an output signal corresponding to the further acoustic input signal provided by the voice activity detector by a speech recognition unit to detect speech, if voice activity was detected by the voice activity detector,
modifying the acoustic output signal if speech was detected by the speech recognition unit during the output of the output signal.

2. Method according to claim 1, wherein the modifying step comprises reducing the volume of the output signal.

3. Method according to claim 1 or 2, wherein the modifying step comprises interrupting the outputting of the output signal.

4. Method according to one of the preceding claims, wherein in the processing step by the speech recognition unit, speech is detected using at least one criterion based on a Hidden Markov Model, a pause model, an artificial neural network, confidence features, the number of interrupted words, and/or a code book.

5. Method according to claim 4, wherein at least two criteria are used, further comprising the step of feeding the results of the at least two criteria to a classification unit.

6. Method according to one of the preceding claims, wherein the processing step by the speech recognition unit comprises recognizing speech by the speech recognition unit.

7. Method according to one of the preceding claims, wherein the receiving step comprises processing the further acoustic input signal by an acoustic echo canceller, a noise reduction means, and/or a feedback suppression means.

8. Method according to one of the preceding claims, wherein the receiving step comprises receiving a plurality of further acoustic input signal emanating from a plurality of microphones.

9. Method according to claim 7, wherein the receiving step comprises combining the plurality of input signals, preferably using a beamformer.

10. Computer program product directly loadable into an internal memory of a digital computer, comprising software code portions for performing the steps of the method according to one of the claims 1 to 9.

11. Computer program product stored on a medium readable by a computer system, comprising computer readable program means for causing a computer to perform the steps of the method according to one of the claims 1 to 9.

12. Speech dialog system, comprising a signal input unit, a voice activity detector, a speech recognition unit, and a signal output unit,
wherein the speech dialog system is configured such that if the voice activity detector detects voice activity for an input signal and the speech recognition unit detects speech for the input signal or for an output signal corresponding to the input signal provided by the voice activity detector during an output of the signal output unit, the output signal of the signal output unit is modified.

13. Speech dialog system according to claim 12, wherein the output signal comprises a speech signal.

14. Speech dialog system according to claim 12 or 13, wherein the speech dialog system is configured such that the modification of the output signal is a reduction of the volume and/or an interruption of the output signal.

15. Speech dialog system according to one of the claims 12 - 14, further comprising a control unit, wherein
the voice activity detector has an output for providing a detector output signal if speech activity was detected,
the speech recognition unit has an input for receiving the detector output signal and an output for providing a recognizer output signal if speech was detected,
the control unit has an input for receiving the recognizer output signal and an output for providing a control signal depending on the recognizer output signal, and
the signal output unit has an input for receiving the control signal and an output for providing an output signal depending on the control signal.

16. Speech dialog system according to claim 15, wherein the control signal initiates an output of an output signal.

17. Speech dialog system according to claim 15 or 16, wherein
the speech recognition unit is configured to determine a modification signal if speech is detected by the speech recognition unit and further comprises an output for providing the modification signal, and
the signal output unit is connected to the speech recognition unit and comprises an input for receiving the modification signal.

18. Speech dialog system according to claim 17, wherein the modification signal is configured to interrupt the output of an output signal.

19. Speech dialog system according to one of the claims 12 - 18, wherein the signal input unit comprises a plurality of microphones and a beamformer and comprises an output for providing a beamformed input signal to the signal detection unit.

20. Speech dialog system according to one of the claims 12 - 19, wherein the signal input unit comprises echo cancellation means and/or noise reduction means and/or feedback suppression means.

21. Speech dialog system according to one of the claims 12 - 20, wherein the signal output unit further comprises a memory for storing at least one predetermined output signal and/or a signal synthesizing means, preferably a speech synthesizing means.
